# EUROPÄISCHE PATENTSCHRIFT

(11) **EP 1 532 425 B1**
(45) Veröffentlichungstag und Bekanntmachung des Hinweises auf die Patenterteilung: **26.09.2007**
(21) Anmeldenummer: 03732504.0
(22) Anmeldetag: 30.05.2003
(51) Int. Cl.: G01D 5/16, H01F 10/32

(54) **SENSORELEMENT FÜR EINEN UMDREHUNGSZÄHLER**
SENSOR ELEMENT FOR REVOLUTION COUNTER
ELEMENT DE DETECTION POUR COMPTE-TOURS

(30) Priorität: 30.08.2002 DE 10239904
(43) Veröffentlichungstag der Anmeldung: 25.05.2005
(73) Patentinhaber: Horst Siedle GmbH & Co. KG., 78120 Furtwangen (DE)
(72) Erfinder: HALDER, Ernst, 71272 Renningen (DE); MATTHEIS, Roland, 07743 Jena (DE); DIEGEL, Marco, Dr., 07745 Jena (DE); STEENBECK, Klaus, 07745 Jena (DE)
(74) Vertreter: Schäfer, Wolfgang
(86) Internationale Anmeldenummer: PCT/EP2003/005675
(87) Internationale Veröffentlichungsnummer: WO 2004/020952

(56) Entgegenhaltungen:
- EP-B1- 0 721 563
- WO-A-00/17660
- DE-A- 19 746 199
- US-B1- 6 219 212

## Beschreibung

### Stand der Technik

Die Erfindung betrifft ein Sensorelement insbesondere für einen Umdrehungszähler, nach dem Oberbegriff des Anspruchs 1.

Beispielsweise im Zusammenhang mit einer Lenkwelle eines Kraftfahrzeugs ist es bekannt, einen Winkelsensor vorzusehen, mit dem die exakte Winkelstellung der Lenkwelle gemessen werden kann. Ein derartiger Winkelsensor ist aus der EP 0 721 563 B1 bekannt. Dort ist ein Winkelsensor beschrieben, bei dem von zwei schwenkbaren Magneten eine Domänenwand in einem ortsfesten magnetischen Schichtaufbau erzeugt wird. Es kann dann mit Hilfe des Giant Magneto Resistance (GMR) Effekts diejenige Winkelstellung ermittelt werden, die die beiden Magnete einnehmen.

Das Sensorelement der EP 0 721 563 B1 ist nur dazu geeignet, eine Winkelstellung innerhalb eines Winkelbereichs von weniger als 360 Grad zu erkennen. Das bekannte Sensorelement ist jedoch nicht in der Lage, mehrere Umdrehungen der beiden Magnete zu erkennen. Ein Umdrehungszähler, mit dem die Anzahl von Umdrehungen der beiden Magnete ermittelbar ist, kann deshalb mit dem bekannten Sensorelement nicht realisiert werden.

Da jedoch die Lenkwelle eines Kraftfahrzeugs um mehrere Umdrehungen gedreht werden kann, ist es erforderlich, zusätzlich zu dem Winkelsensor einen Umdrehungszähler vorzusehen, der in der Lage ist, die exakte Anzahl an Umdrehungen anzugeben, um die die Lenkwelle gedreht worden ist. Häufig wird ein derartiger Umdrehungszähler mit einem Winkelsensor kombiniert, so dass dann die Drehstellung der Lenkwelle hinsichtlich der Anzahl der Umdrehungen sowie hinsichtlich der Winkelstellung angegeben werden kann.

Es sind beispielsweise berührungslose Umdrehungszähler bekannt, bei denen ein magnetisches Feld an einem Sensorelement vorbeibewegt wird. Das magnetische Feld wird beispielsweise durch einen Permanentmagneten erzeugt, der an der Lenkwelle des Kraftfahrzeugs angebracht und mit dieser drehbar ist. Bei dem Sensorelement handelt es sich beispielsweise um einen Hall-Sensor, der somit jedes Mal, wenn das magnetische Feld an ihm vorbeibewegt wird, ein elektrisches Signal erzeugt. In Abhängigkeit von diesen Signalen kann auf die Anzahl an Umdrehungen geschlossen werden, um die die Lenkwelle gedreht worden ist.

Der Nachteil der bekannten Umdrehungszähler besteht darin, dass zu deren Betrieb eine Energieversorgung vorhanden sein muss. So ist es beispielsweise erforderlich, den Hall-Sensor mit einer Spannung zu versorgen, damit von diesem ein Signal erzeugt werden kann, wenn sich ein magnetisches Feld an ihm vorbeibewegt.

Bei einem Ausfall der Energieversorgung sind die bekannten Umdrehungszähler somit nicht mehr funktionsfähig und müssen darüber hinaus nach einem derartigen Ausfall der Energieversorgung durch zusätzliche Maßnahmen auf die gegebenenfalls veränderte Anzahl an Umdrehungen neu eingestellt werden.

An dieser Stelle sei zur Vervollständigung darauf hingewiesen, dass natürlich nicht nur das magnetische Feld an dem Sensorelement vorbeibewegt werden kann, sondern dass auch umgekehrt das Sensorelement an dem magnetischen Feld vorbeibewegt werden kann.

Aufgabe, Lösung und Vorteile der Erfindung

Aufgabe der Erfindung ist es, ein Sensorelement insbesondere für einen Umdrehungszähler zu schaffen, das auch ohne eine Energieversorgung in der Lage ist, immer die exakte Anzahl z.B. an Umdrehungen anzugeben, um die z.B. die Lenkwelle gedreht worden ist.

Diese Aufgabe wird erfindungsgemäß durch ein Sensorelement nach dem Anspruch 1 gelöst.

Die Erfindung wird ebenfalls durch einen Umdrehungszähler realisiert, bei dem ein erfindungsgemäßes Sensorelement verwendet ist.

Bei der Erfindung entsteht eine Veränderung der Magnetisierung in dem Sensorelement, wenn das magnetische Feld an dem Sensorelement vorbeibewegt wird. Diese Veränderung der Magnetisierung wird von dem Sensorelement gespeichert. Wird das magnetische Feld mehrfach an dem Sensorelement vorbeibewegt, so werden mehrere Veränderungen der Magnetisierung in dem Sensorelement gespeichert. Die Anzahl der gespeicherten Veränderungen entspricht somit derjenigen Anzahl, die angibt, wie oft das magnetische Feld an dem Sensorelement vorbeibewegt worden ist. Wie noch erläutert werden wird, stellen diese gespeicherten Veränderungen der Magnetisierung eine Eigenschaftsänderung des Sensorelements dar, die mit Hilfe von bekannten Verfahren erkannt bzw. gemessen werden kann.

Im Falle eines Umdrehungszählers, bei dem bei jeder Umdrehung das magnetische Feld ein Mal an dem Sensorelement vorbeibewegt wird, entspricht somit die Anzahl der in dem Sensorelement gespeicherten Veränderungen der Magnetisierung der Anzahl der gezählten Umdrehungen.

Wesentlich ist, dass die Veränderung der Magnetisierung bei dem erfindungsgemäßen Sensorelement ohne jegliche externe Energieversorgung erreicht wird. Statt dessen wird die Veränderung der Magnetisierung des Sensorelements alleine durch dessen Schichtaufbau und dessen Gestalt erreicht.

Die Erfindung stellt somit ein Sensorelement insbesondere für einen Umdrehungszähler zur Verfügung, der eine fortlaufende, berührungslose Erfassung der Anzahl z.B. der Umdrehungen ermöglicht, ohne dass hierzu eine Energieversorgung erforderlich ist. Auch bei einem Ausfall der Energieversorgung bleibt das erfindungsgemäße Sensorelement ohne weitere Maßnahmen funktionsfähig. Es müssen somit nach einem derartigen Ausfall der Energieversorgung keinerlei Maßnahmen für den weiteren korrekten Betrieb des Sensorelements getroffen werden.

Bei einer vorteilhaften Weiterbildung der Erfindung entsteht in dem Sensorelement eine Domänenwand, insbesondere eine 360°-Grad Wand, wenn das magnetische Feld an dem Sensorelement vorbeibewegt wird, wobei mehrere 360°-Wände in dem Sensorelement speicherbar sind.

Wenn das magnetische Feld an dem Sensorelement vorbeibewegt wird (bzw. umgekehrt), ändert sich in dem magnetischen Schichtaufbau des Sensorelements die Magnetisierung. Diese Veränderung der Magnetisierung kann z.B. die Erzeugung einer Domänenwand oder die Ummagnetisierung einer Fläche im Sensor sein. In einer Domänenwand dreht sich die Magnetisierung auf engem Raum z.B. um 90°, 180° oder 360° (sogenannte 90°-, 180°- und 360°-Wand). Von diesen Domänenwänden ist die 360°-Wand die gegenüber äußeren Magnetfeldern stabilste Konfiguration. Eine besonders vorteilhafte Ausgestaltung der Erfindung sieht die Erzeugung und Speicherung von 360°-Wänden in dem magnetischen Schichtaufbau vor.

Wenn das magnetische Feld an dem erfindungsgemäßen Sensorelement vorbeibewegt wird (bzw. umgekehrt), wird aufgrund der geometrischen Form und den magnetischen Eigenschaften des Sensorelements innerhalb seines magnetischen Schichtaufbaus eine Domänenwand erzeugt. Nach einer Umdrehung des magnetischen Felds hat sich diese Domänenwand zu einer 360°-Wand ausgebildet. Der Drehsinn der Magnetisierung innerhalb der 360°-Wand folgt dem Drehsinn des Magnetfelds zum Sensorelement. Wird das Magnetfeld entgegengesetzt gedreht, baut sich eine 360°-Wand auf, deren Drehsinn ebenfalls entgegengesetzt ist.

Wie erwähnt wurde, wird bei dieser bevorzugten erfindungsgemäßen Lösung eine 360°-Wand in dem Sensorelement erzeugt und gespeichert, wenn das magnetische Feld einmal um das Sensorelement (oder umgekehrt) gedreht wird. Dies bedeutet, dass nach einer Umdrehung z.B. einer mit einem geeignetem Permanentmagneten versehenen Lenkwelle bei dieser erfindungsgemäßen Lösung genau eine 360°-Wand in dem Sensorelement erzeugt und gespeichert worden ist.

Für die Erzeugung und Aufrechterhaltung bzw. Speicherung der Domänenwand ist keine Energieversorgung notwendig. Notwendig sind lediglich ein hinreichend großes Magnetfeld, eine geeignete geometrische Form und geeignete magnetische Eigenschaften zumindest von Teilen des Sensorelements.

Bei einer vorteilhaften Weiterbildung der Erfindung ist das Sensorelement so gestaltet, dass es mehr als eine 360°-Wand speichern kann. Hierdurch können fortlaufend zu jeglichen Umdrehungen beispielsweise der Lenkwelle entsprechend viele 360°-Wände in dem Sensorelement erzeugt und gespeichert werden. Wie schon erwähnt wurde, baut sich eine 360°-Wand auf, deren Drehsinn ebenfalls entgegengesetzt ist, wenn das Magnetfeld entgegengesetzt gedreht wird. 360°-Wände mit entgegengesetztem Drehsinn lösen sich auf, wenn sie zusammenstoßen.

Aufgrund der geometrischen Struktur und den magnetischen Eigenschaften des erfindungsgemäßen Sensorelements ist es gewährleistet, dass sich gegensinnig drehende 360°-Wände treffen und damit gegenseitig auslöschen. Durch diese Eigenschaft kann dem erfindungsgemäßen Sensorelement eine Nullposition zugeordnet werden, von der aus es Umdrehungen links- und rechtsherum zählen kann. Das Sensorelement registriert alle Umdrehungen, zählt aber immer nur die Anzahl von Umdrehungen, die aktuell übrig bleiben. Dies bedeutet, dass das erfindungsgemäße Sensorelement immer den Betrag der Differenz der Anzahl Umdrehungen rechtsherum minus der Anzahl Umdrehungen linksherum aufweist. Zum Beispiel ist in dem Sensorelement nach vier Umdrehungen rechts herum und anschließend drei Umdrehungen links herum genau eine 360°-Wand für eine Umdrehung rechts herum gespeichert, die die aktuelle Umdrehung der Lenkwelle bezüglich der Nullposition angibt.

Für die Erzeugung und Speicherung von Veränderungen der Magnetisierung, insbesondere von 360°-Wänden, ist keine Energieversorgung notwendig. Somit hat auch ein Energieausfall keine Auswirkung auf die Registrierung und Zählung einer Umdrehung z.B. der Lenkwelle. Während eines Energieausfalls zählt das erfindungsgemäße Sensorelement nach wie vor die Umdrehungen. Die aktuelle Anzahl an Umdrehungen kann während eines Energieausfalles unter Umständen nicht ausgelesen werden. Sobald die Energieversorgung nach dem Ausfall wieder vorhanden ist, ist die aktuelle Umdrehungszahl jedoch ohne weitere Maßnahmen wieder aus dem Sensorelement auslesbar.

Wie bereits erwähnt wurde, stellen die gespeicherten Veränderungen der Magnetisierung eine Eigenschaftsänderung des Sensorelements dar. Bevorzugte erfindungsgemäße Lösungen verwenden zum Erkennen bzw. Messen dieser Eigenschaftsänderung und damit zum Auslesen des Sensorelements den elektrischen Widerstand des Sensorelements.

Es sind magnetoresistive Materialien und Schichtaufbauten bekannt, bei denen eine Veränderung der Magnetisierung eine relativ große und damit gut messbare Widerstandsänderung hervorruft. Besonders bevorzugt sind Schichtstapel, die den Giant Magneto Resistance (GMR) Effekt oder den Tunnel Magneto Resistance (TMR) Effekt aufweisen. Merkmal dieser Schichtstapel sind zwei magnetische Schichten bzw. Schichtstapel, von denen eine magnetisch weich und die andere magnetisch hart ist, und die durch eine unmagnetische Metallschicht (GMR-Effekt) oder eine Isolationsschicht (TMR-Effekt) voneinander getrennt sind. Die Magnetisierung der magnetisch weichen Schicht wird durch das äußere Magnetfeld geändert, während die Magnetisierung der hartmagnetischen Schicht unverändert bleibt. Um die hartmagnetische Schicht magnetisch sehr hart zu machen, kann sie mit einer antiferromagnetischen Schicht oder einem künstlichen Antiferromagneten bzw. Ferrimagneten in Kontakt sein.

Beim GMR-Effekt und TMR-Effekt ist der elektrische Widerstand abhängig von den Magnetisierungsrichtungen der beiden magnetischen Schichten zueinander. Der Widerstand ist minimal, wenn die Magnetisierungen parallel sind, und maximal, wenn sie antiparallel sind. Ursache hierfür ist die spinabhängige Streuung der Elektronen in diesen Materialien, weshalb solche Schichtstapel auch als Spinventile bezeichnet werden. Der hierdurch verursachte magnetoresistive Widerstand kann z.B. 10% bei typischen GMR-Systemen und 40% bei typischen TMR-Systemen erreichen.

Bevorzugte erfindungsgemäße Lösungen verwenden als magnetische Struktur ein Spinventil basierend auf dem GMR-Effekt oder TMR-Effekt. Hierdurch wird die durch die Umdrehung des äußeren Magnetfeldes im Sensorelement hervorgerufene Magnetisierungsänderung, z.B. eine 360°-Wand, in eine gut messbare Widerstandsänderung umgesetzt.

Dieser elektrische Widerstand kann durch eine entsprechende elektrische Schaltung direkt oder indirekt ermittelt werden. Der ermittelte Widerstand oder eine davon abgeleitete Größe entspricht dann der Anzahl an Umdrehungen, um die z.B. die Lenkwelle gedreht worden ist. Sofern für die Ermittlung des elektrischen Widerstands oder der daraus abgeleiteten Größe eine Energieversorgung erforderlich ist, so kann die Anzahl an Umdrehungen - wie bereits erwähnt wurde - während eines Energieausfalles nicht ermittelt werden. Nach dem Energieausfall ergibt die Ermittlung des elektrischen Widerstands oder der daraus abgeleiteten Größe jedoch sofort wieder ohne jegliche zusätzliche Maßnahmen die korrekte und aktuelle Anzahl an Umdrehungen.

Bei der Erfindung weist das Sensorelement einen Wandgenerator und einen Wandspeicher auf. Der Wandgenerator ist dabei für die Erzeugung von Domänenwänden, insbesondere von 360°-Wänden, und der Wandspeicher für die Speicherung der erzeugten Wände zuständig.

Erfindungsgemäß ist der Wandgenerator im wesentlichen kreisförmig oder vieleckig ausgebildet. Weiterhin ist der Wandspeicher im wesentlichen länglich, insbesondere keilförmig ausgebildet.

Besonders vorteilhaft ist es, wenn der Wandgenerator derart ausgebildet ist, dass die Magnetisierungsrichtung in dem Wandgenerator leicht einem sich bewegenden, äußeren Magnetfeld folgen kann. Weiterhin ist es besonders vorteilhaft, wenn der Wandspeicher derart ausgebildet ist, dass die Magnetisierungsrichtung in dem Wandspeicher durch ein sich bewegendes, äußeres Magnetfeld kaum gedreht werden kann.

Bei einer besonders vorteilhaften Ausgestaltung der Erfindung verjüngt sich der Wandspeicher keilförmig vom Wandgenerator weg. Dies ermöglicht eine Energieminimierung aufgrund der Verkürzung der Wandlänge, so dass die sich aktuell bildende 360°-Wand zur Spitze des Wandspeichers hin bewegt wird.

Bei einer vorteilhaften Ausgestaltung der Erfindung weist ein Wandspeicher eine Verengung auf, in der sich mindestens eine Wand lokalisieren kann. Die Lokalisierung erfolgt aufgrund der Verkürzung der Wandlänge und dem damit erreichten Energiegewinn. Alternativ kann diese Verengung auch so schmal sein, dass sich die Domänenwand vor der Verengung lokalisiert, d.h. die Magnetisierung dreht sich nicht innerhalb der Verengung. Hilfreich hierfür ist die oben erwähnte Keilform des Wandgenerators.

Eine besonders vorteilhafte Ausgestaltung der Erfindung sieht vor, dass für jede zu zählende Umdrehung genau eine geeignet dimensionierte Verengung im Wandspeicher vorgesehen ist, in die sich genau eine Domänenwand lokalisiert. Diese Verengungen sind so gestaltet, dass sich aktuell bildende Domänenwände hindurchbewegen können, sofern diese Verengung nicht mit einer Wand besetzt ist.

Anstelle der Verengung sieht eine weitere vorteilhafte Ausgestaltung der Erfindung vor, dass der Wandspeicher mindestens eine gezielt eingebrachte, lokal begrenzte Änderung der magnetischen Eigenschaften aufweist. Durch diese Änderungen wird erreicht, dass sich die Wände bevorzugt an den Stellen der Änderungen festsetzen.

Eine weitere besonders vorteilhafte Ausgestaltung der Erfindung sieht die Kombination von Verengung/en und lokale/n Änderung/en zur Lokalisierung der Wand/Wände vor.

Bei einer weiteren vorteilhaften Ausgestaltung der Erfindung weist der Wandspeicher zwei Kontakte auf. Über diese Kontakte kann die Anzahl der in dem Wandspeicher gespeicherten Wände insbesondere durch eine Messung des elektrischen Widerstands ermittelt werden.

Vorteilhaft ist es, wenn die Kontakte so angeordnet sind, dass sich alle im Wandspeicher maximal befindlichen bzw. lokalisierten Wände zwischen diesen Kontakten befinden, und zugleich die nicht mit Domänenwänden gefüllten Bereiche zwischen den Kontakten minimal sind. Damit wird gewährleistet, dass bei der Ermittlung der Anzahl der in dem Wandspeicher gespeicherten Wände auch tatsächlich alle dort vorhandenen Wände erfasst werden, und dass das Messsignal möglichst groß ist.

Eine weitere vorteilhafte Ausgestaltung der Erfindung sieht die Kombination obiger Ausgestaltungen vor, so dass für jede zu zählende Umdrehung genau eine geeignet dimensionierte Verengung und/oder Änderung im Wandspeicher vorgesehen ist, in die sich genau eine Domänenwand lokalisiert, und dass seitlich von jeder Verengung und/oder Änderung mindestens ein Kontakt vorhanden ist, so dass jede Lokalisierungsposition einzeln ausgelesen werden kann. Diese Ausgestaltung ermöglicht ein hohes Messsignal und ein quasi digitales Speichern der gezählten Umdrehungen.

Eine besonders vorteilhafte Ausgestaltung der Erfindung sieht vor, dass der Wandspeicher vor dem äußeren Magnetfeld abgeschirmt ist, das im Wandgenerator die Magnetisierungsänderung hervorruft. Durch die Abschirmung wird erreicht, dass sich die Wände im Wandspeicher nur aufgrund der geometrischen Form und der magnetischen Eigenschaften des Wandspeichers, sowie dem Einfluss der Magnetisierung im Wandgenerator bewegen können.

Vorteilhafte Ausgestaltungen sehen vor, dass diese Abschirmung durch mindestens eine magnetische Schicht über dem Wandgenerator realisiert ist.

Alternative Ausgestaltungen der erfindungsgemäßen Lösung speichern anstelle der Domänenwände, insbesondere anstelle der 360°-Wände, verschiedene Magnetisierungsanordnungen, z.B. verschieden große ummagnetisierte Flächen, denen dann eindeutig Umdrehungen zugeordnet werden können.

Zur Ermittlung der Anzahl der Umdrehungen ist es besonders vorteilhaft, wenn die elektrische Schaltung eine Wheatstone'sche Brücke mit vier Sensorelementen aufweist. Auf diese Weise wird mit wenig Aufwand eine hohe Genauigkeit erreicht.

Eine besonders bevorzugte Anwendung des erfindungsgemäßen Sensorelements oder des erfindungsgemäßen Umdrehungszählers besteht bei Kraftfahrzeugen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Ausführungsbeispiele der Erfindung
- Figur 1: zeigt eine schematische Draufsicht auf ein Ausführungsbeispiel eines Umdrehungszählers mit drei erfindungsgemäßen Sensorelementen,
- Figuren 2a und 2b: zeigen schematische Querschnitte durch eines der Sensorelemente der Figur 1,
- Figur 3: zeigt eine schematische Draufsicht auf das Sensorelement der Figur 2,
- Figur 4: zeigt eine schematische Darstellung der Magnetisierung in einer sogenannten 360°-Wand des Sensorelements der Figur 2,
- Figuren 5a und 5b: zeigen schematische Blockschaltbilder von Ausführungsbeispielen einer elektrischen Schaltung für die Sensorelemente der Figur 1, und
- Figuren 6 und 7: zeigen schematische Draufsichten auf alternative Ausführungsbeispiele der Sensorelemente der Figur 1.

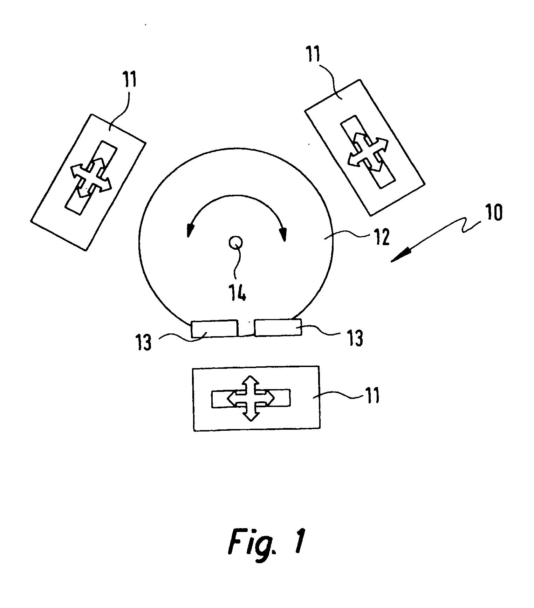

In der Figur 1 ist ein Umdrehungszähler 10 dargestellt, der drei ortsfeste Sensorelemente 11 und einen Rotor 12 mit zwei daran benachbart zueinander angebrachten Permanentmagneten 13 aufweist. Der Rotor 12 ist um eine Achse 14 drehbar. Die Sensorelemente 11 sind in einem Winkel von beispielhaft etwa 120 Grad zueinander angeordnet. Die Sensorelemente 11 sind derart dem Rotor 12 zugeordnet, dass das magnetische Feld der Permanentmagneten 13 bei einer Drehung des Rotors 12 an den Sensorelementen 11 vorbeibewegt wird und von jedem der Sensorelemente 11 erfasst wird.

Der Umdrehungszähler 10 ist zur berührungslosen Zählung von beispielsweise bis zu zehn Umdrehungen des Rotors 12 (bzw. fünf Umdrehungen in beiden Richtungen) durch die Sensorelemente 11 vorgesehen. Wie beschrieben werden wird, ist die Umdrehungszählung dabei ohne eine äußere Energieversorgung möglich.

Die drei Sensorelemente 11 sind gleichartig ausgebildet. Nachfolgend wird deshalb immer nur noch ein einziges der Sensorelemente 11 beschrieben.

Es versteht sich, dass bei dem Umdrehungszähler 10 der Figur 1 auch die Permanentmagnete 13 ortsfest angeordnet und die drei Sensorelemente 11 um die Achse 14 drehbar vorgesehen sein können, so dass auch in diesem Fall das magnetische Feld der Permanentmagnete 13 an den Sensorelementen 11 vorbeibewegt wird.

Die Zählung der Umdrehungen durch das Sensorelement 11 erfolgt durch Ausnutzung des Giant Magneto Resistance (GMR) Effekts oder des Tunnel Magneto Resistance (TMR) Effekts. Alternativ ist es ebenfalls möglich, mit Hilfe von magneto-optischen und/oder magneto-striktiven Verfahren die Anzahl der von dem Sensorelement 11 gezählten Umdrehungen zu ermitteln.

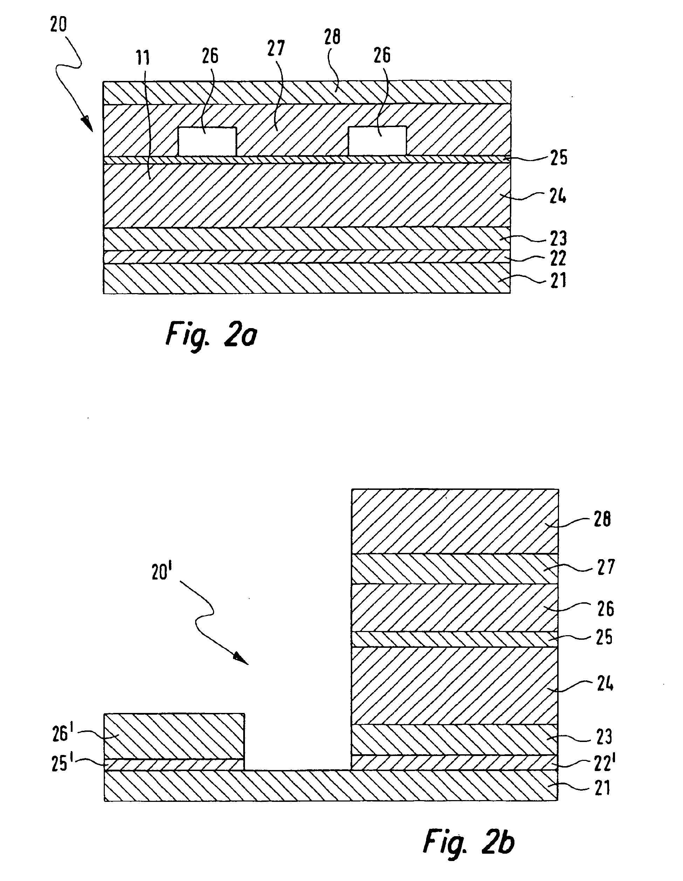

Figur 2a zeigt einen erfindungsgemäßen Schichtaufbau 20 des Sensorelements 11, der zum Auslesen der gezählten Umdrehungen den GMR Effekt verwendet. Eine weichmagnetische Schicht 21 wird durch eine dünne unmagnetische Metallschicht 22 von einer hartmagnetischen Schicht 23 getrennt. Eine antiferromagnetische Schicht 24 auf der hartmagnetischen Schicht 23 dient dazu, die letztere magnetisch noch härter zu machen. Dies bedeutet, dass die Magnetisierung in der hartmagnetischen Schicht 23 im Gegensatz zur Magnetisierung der weichmagnetischen Schicht 21 nicht durch das Magnetfeld des Permanentmagneten 13 geändert werden kann. Auf der Schicht 24 befindet sich eine Kontaktierungsschicht 25, auf der zwei Kontakte 26 angebracht sind. Der Messstrom fließt zwischen den beiden Kontakten 26 horizontal und vertikal durch den gesamten Schichtaufbau 20, also durch die Schichten 21, 22, 23, 24 und 25.

Figur 2b zeigt einen erfindungsgemäßen Schichtaufbau 20' des Sensorelements 11, der zum Auslesen der gezählten Umdrehungen den TMR Effekt verwendet. Es ergeben sich folgende Änderungen gegenüber der Figur 2a. Die unmagnetische Metallschicht 22 wird durch eine Isolationsschicht 22' ersetzt, die eine Tunnelbarriere darstellt. Einer der beiden Kontakte 26 wird durch einen Kontakt 26' ersetzt. Dieser Kontakt 26' befindet sich entweder direkt auf der weichmagnetischen Schicht 21 (nicht gezeigt) oder vorzugsweise auf einer Kontaktschicht 25' auf der weichmagnetischen Schicht 21. D.h. zum Aufbringen des Kontaktes 26' muss der Schichtstapel 20' lokal bis zur weichmagnetischen Schicht 21 abgeätzt werden. Dies erfolgt vorzugsweise in einem seitlichen Bereich. Der Messstrom fließt beispielsweise über den Kontakt 26 vertikal durch die Schichten 25, 24 (antiferromagnetische Schicht), 23 (hartmagnetische Schicht), 22'(Tunnelbarriere), zur weichmagnetischen Schicht 21, um anschließend horizontal zur Kontaktschicht 25' sowie zum Kontakt 26' zu fließen.

Wie noch erläutert werden wird, können die Kontakte 26, 26' in einer Isolationsschicht 27 enthalten sein, die von einer Abdeckschicht 28 abgedeckt ist.

Der gesamte Schichtaufbau 20, 20' kann z.B. auf einem (oxidierten) Siliziumsubstrat aufgebracht werden. Ein derartiger Schichtaufbau 20, 20' wird auch als Spinventil bezeichnet.

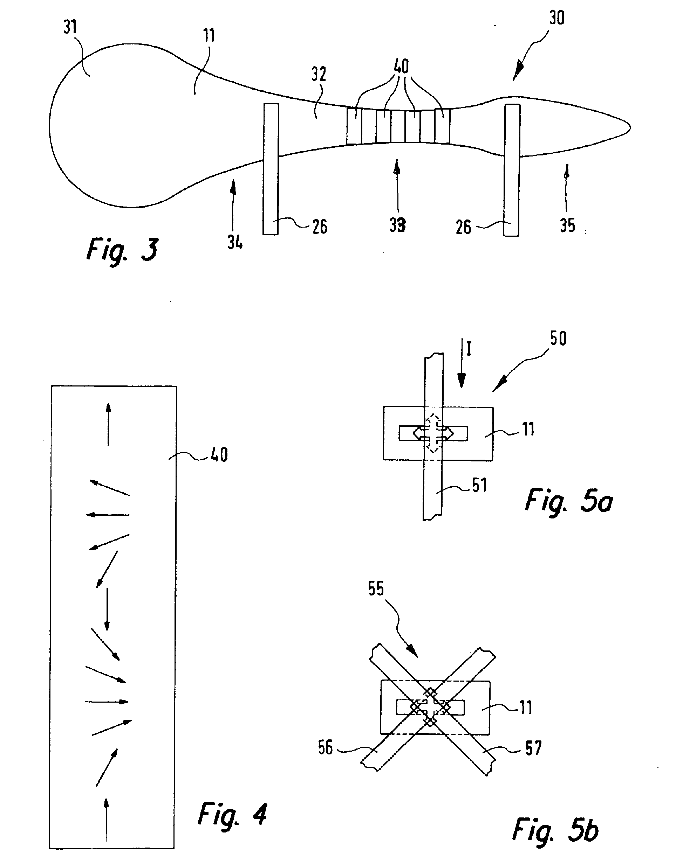

In der Figur 3 ist eine erfindungsgemäße geometrische Ausgestaltung des Sensorelements 11 in einer Draufsicht dargestellt. Das Sensorelement 11 besitzt eine längliche, uhrzeigerförmige Gestalt 30 und ist spiegelsymmetrisch zu einer (nicht dargestellten) Längsachse ausgebildet.

Im linken Bereich der Figur 3 weist das Sensorelement 11 einen Wandgenerator 31 auf. Dieser ist in der Figur 3 kreisförmig ausgebildet, könnte aber auch achteckig oder ganz allgemein vieleckig ausgestaltet sein. Im Bereich des Wandgenerators 31 ist die Abdeckschicht 28 nicht vorhanden.

Durch die Gestalt und Größe des Wandgenerators 31 kann seine Magnetisierungsrichtung leicht einem sich bewegenden, äußeren Magnetfeld des Permanentmagneten 13 folgen. Dies wird bei dem Wandgenerator 31 der Figur 3 insbesondere durch seine kreisförmige Ausbildung erreicht.

An den Wandgenerator 31 schließt sich mit einem abgerundeten Übergang ein Wandspeicher 32 an, der lang und schmal ausgebildet ist. Durch diese Gestalt des Wandspeichers 32 und der daraus folgenden Formanisotropie dreht sich die Magnetisierung innerhalb des Wandspeichers 32 kaum durch das sich bewegende, äußere Magnetfeld des Permanentmagneten 13.

Im Bereich des Wandspeichers 32 ist die Abdeckschicht 28 vorhanden. Der Einfluss des Magnetfelds wird durch die Abdeckschicht 28 weiter vermindert. Dabei kann es sich um eine magnetische Abschirmungsschicht, z.B. aus Permalloy handeln.

Der Wandspeicher 32 weist eine Verengung 33 auf, die sich etwa mittig zwischen den Kontakten 26 befindet. Der vordere Teil 34 des Wandspeichers 32 verjüngt sich bis zur Verengung 33 keilförmig. Hinter der Verengung 33 befindet sich eine schmale Spitze 35 des Wandspeichers. Die Spitze 35 ist so ausgestaltet, dass sich ihre Magnetisierung, z.B. aufgrund der Formanisotropie, nicht ändert. Aufgrund dieser Form des Wandspeichers 32 lokalisieren sich Domänenwände innerhalb der Verengung 33 zwischen den Kontakten 26. Dies ist in der Figur 3 durch vier sogenannte 360°-Wände 40 dargestellt.

Anstelle der Verengung 33 ist es möglich, eine oder mehrere gezielt eingebrachte, lokal begrenzte Änderungen der magnetischen Eigenschaften des Wandspeichers 32 vorzusehen, um auf diese Weise eine Lokalisierung der Wände 40 zu erreichen. Hierzu können insbesondere die magnetischen Eigenschaften der weichmagnetischen Schicht lokal so geändert werden, dass sich die Wände 40 bevorzugt an diesen Stellen festsetzen. Die Änderungen der magnetischen Eigenschaften können z.B. Löcher, gezielte lokale Dotierungen oder Manipulationen einzelner Kristallite oder Korngrenzen z.B. durch lokales Aufheizen mit einem Laserstrahl in zumindest einer Schicht des Schichtaufbaus 20 sein.

Bevorzugte Ausbildungen sehen auf und/oder unter und/oder neben der weichmagnetischen Schicht bzw. des Schichtaufbaus 20 mindestens eine lokal begrenzte hartmagnetische Schicht vor, z.B. als schmaler Streifen quer über dem Wandspeicher 32. Die Lokalisierung der Wand/Wände 40 beruht auf der lokal begrenzten Wechselwirkung dieser hartmagnetischen Schicht mit der weichmagnetischen Schicht des Wandspeichers.

Derartige 360°-Wände 40 werden durch die gegensinnige Anordnung der Permanentmagnete 13 am Rotor 12 erreicht. Werden diese Permanentmagneten 13 z.B. im Uhrzeigersinn an dem Sensorelement 11 vorbeibewegt, so erzeugt der erste Magnet eine 180°-Wand in der weichmagnetischen Schicht 21, die durch die Form des Sensorelements 11 in den Wandspeicher 32 und dort in die Verengung 33 transportiert wird. Der zweite Magnet erzeugt eine zweite, entgegengesetzte 180°-Wand mit gleichem Drehsinn in der weichmagnetischen Schicht 21, die ebenfalls in die Verengung 33 transportiert wird. Da diese zwei 180°-Wände räumlich eng nebeneinander liegen, bilden sie eine der 360°-Wände 40.

Eine derartige Drehung der Magnetisierungsrichtung um 360° ist in der Figur 4 schematisch dargestellt. Die dort gezeigten Pfeile geben die Magnetisierungsrichtungen in dem betreffenden Teil der 360°-Wand 40 wieder. Die Breite der 360°-Wand 40 beträgt nur wenige 10 nm - 100 nm, d.h. nur einige Dutzend bis 100 Kristallite. Die Länge hängt ab von der Breite des Wandspeichers 32.

Durch die Keilform kann die 360°-Wand 40 ihre Länge verkürzen und damit ihre Energie minimieren. Deswegen transportiert die Keilform des vorderen Teils 34 des Wandspeichers 32 die 360°-Wände 40 in die Verengung 33. So ist es für die 360°-Wände 40 energetisch ein Optimum, sich innerhalb der Verengung 33 zu lokalisieren. Umgekehrt ist es für die 360°-Wände 40 kein Optimum, sich im Wandgenerator 31 zu befinden.

Jede der 360°-Wände 40 läuft somit automatisch von dem Wandgenerator 31 über den keilförmigen Teil 34 zu dem Wandspeicher 32 und bleibt dort etwa in der Verengung 33 stehen. Dies erfolgt aufgrund der jeweiligen Energiezustände, die die 360°-Wand 40 durchläuft. Dabei besitzt die 360°-Wand 40 im Bereich des Wandgenerators 31 eine größere Energie als in dem Bereich des Wandspeichers 32. Im Bereich der Verengung 33 besitzt die 360°-Wand 40 die geringste Energie.

Die Spitze 35 ist ein Hindernis für die 360°-Wände 40. Sie bewirkt, dass die 360°-Wände 40 nicht nach vorne durchlaufen und dort vernichtet werden können. Insgesamt bewegen sich die 360°-Wände 40 deshalb - wie erwähnt - vom Wandgenerator 31 in die Verengung 33 des Wandspeichers 32 und verharren dort.

Nachdem die Permanentmagnete 13 an dem Sensorelement 11 vorbeibewegt worden sind, hat somit eine bleibende Veränderung der Magnetisierung des Sensorelements 11 stattgefunden, und zwar im Bereich der Verengung 33 des Wandspeicher 32. Dies stellt eine Eigenschaftsänderung des Sensorelements und damit eine Speicherung der Veränderung der Magnetisierung in dem Sensorelement 11 dar.

In der Figur 3 sind in der Verengung 33 des Wandspeichers 32 insgesamt vier derartige 360°-Wände 40 beispielhaft eingezeichnet. Diese vier 360°-Wände ergeben sich dabei beispielsweise aus vier aufeinanderfolgenden Umdrehungen des Rotors 12 im Uhrzeigersinn.

Jede der in der Figur 3 in der Verengung 33 des Wandspeichers 32 lokalisierten 360°-Wände 40 hat eine Änderung des elektrischen Widerstandes zur Folge, der zwischen den Kontakten 26 der Figur 3 messbar ist. Je mehr 360°-Wände 40 in der Verengung 33 vorhanden ist, desto größer wird die Widerstandsänderung, wobei jede 3°60°-Wand 40 den Widerstand in etwa um den gleichen Betrag ändert.

Die Widerstandsänderung aufgrund einer Ummagnetisierung, insbesondere durch eine 360°-Wand 40 in der Verengung 33, ist charakteristisch für ein Spinventil mit GMR- oder TMR-Effekt und beruht allein auf der Anordnung der Magnetisierungsrichtungen im Spinventil. Die Änderungen der Magnetisierung in der weichmagnetischen Schicht 21 des Spinventils erfordern keinerlei Energieversorgung. Erforderlich ist lediglich das hinreichend große Magnetfeld der vorbei bewegten Permanentmagnete 13.

Nur das Messen des Widerstands und damit das Auslesen der gezählten Umdrehungen benötigt für den Zeitraum der Widerstandsmessung eine Energieversorgung, indem z.B. die Kontakte 26 mit einer Spannung beaufschlagt werden. Damit kann direkt oder indirekt der elektrische Widerstand zwischen den Kontakten 26 ermittelt werden. Aufgrund des GMR- bzw. TMR-Effekts ist die durch die 360°-Wand 40 verursachte Widerstandsänderung hinreichend groß, so dass jede einzelne Umdrehung des Rotors 12 registriert werden kann. Aus dem elektrischen Widerstand kann dann auf die Anzahl der 360°-Wände 40 in der Verengung 33 geschlossen werden. Die Anzahl der Wände korrespondiert schließlich zu der Anzahl der Umdrehungen des Rotors 12 im Uhrzeigersinn.

Dreht sich der Rotor 12 im Gegenuhrzeigersinn, so wird eine Wand 40' (nicht dargestellt) erzeugt, deren Magnetisierung im Vergleich zur Wand 40 entgegengesetzt rotiert. Diese Wand 40' wird genauso wie die Wand 40 in die Verengung 33 des Wandspeichers 32 transportiert. Dort trifft die Wand 40'auf die vorhandene Wand 40. Der umgekehrte Drehsinn der jeweiligen Wände 40 und 40' hat die gegenseitige Auslöschung der Wände 40 und 40' zur Folge. Damit ist die Drehung des Rotors 12 in der Gegenrichtung auch in der Anzahl der vorhandenen Wände 40 in der Verengung 33 berücksichtigt. Der elektrische Widerstand zwischen den Kontakten 26 ist damit entsprechend geändert, so dass die Drehung des Rotors 12 in der Gegenrichtung gemessen und erfasst werden kann.

Ist in der Verengung 33 des Wandspeichers 32 keine Wand 40 vorhanden, und wird durch eine Drehung des Rotors 12 im Gegenuhrzeigersinn eine Wand 40'erzeugt, so wird diese Wand 40'- wie schon im Zusammenhang mit den Wänden 40 bereits erläutert wurde - in dem Wandspeicher 32 gespeichert. Damit ist die erfolgte Umdrehung im Gegenuhrzeigersinn wieder über den elektrischen Widerstand messbar. Eine Drehung im Uhrzeigersinn führt dann wieder zur Auslöschung der Wand 40', wie dies entsprechend bereits beschrieben wurde.

In der Figur 5a ist eine elektrische Schaltung 50 dargestellt, bei der eine elektrische Leiterbahn 51 über das Sensorelement 11 gelegt ist, durch die ein Strom I fließen kann. Dieser Strom I ist derart gewählt, dass das von ihm erzeugte Magnetfeld das unter der Leitung 51 angeordnete Sensorelement 11 daran hindert, 360°-Wände 40 aufzubauen. Der Rotor 12 mit den Permanentmagneten 13 kann nunmehr um eine beliebige Anzahl von Umdrehungen gedreht werden, ohne dass dies zu einer Zählung in dem Sensorelement 11 und damit in dem Umdrehungszähler 10 führt. Dieses Vorgehen kann insbesondere bei oder nach der Herstellung des Sensorelements 11 oder des Umdrehungszählers 10 oder bei einer Initialisierung nach dem Einbau des Umdrehungszählers 10 angewendet werden.

In der Figur 5b ist eine elektrische Schaltung 55 dargestellt, bei der zwei elektrische Leiterbahnen 56, 57 unter einem Winkel von etwa 90 Grad über das Sensorelement 11 gelegt sind. Durch die beiden Leiterbahnen 56, 57 können Ströme fließen, die zusammen ein sich drehendes Magnetfeld erzeugen. Damit ist es möglich, mit Hilfe der vorgenannten Ströme 360°-Wände 40 in dem Sensorelement 11 zu erzeugen, ohne dass hierzu eine Drehung des Rotors 12 mit den Permanentmagneten 13 erforderlich ist. Auch diese Schaltung kann insbesondere nach dem Einbau des Umdrehungszählers 10 zu dessen Einstellung auf einen erwünschten Zählerstand verwendet werden.

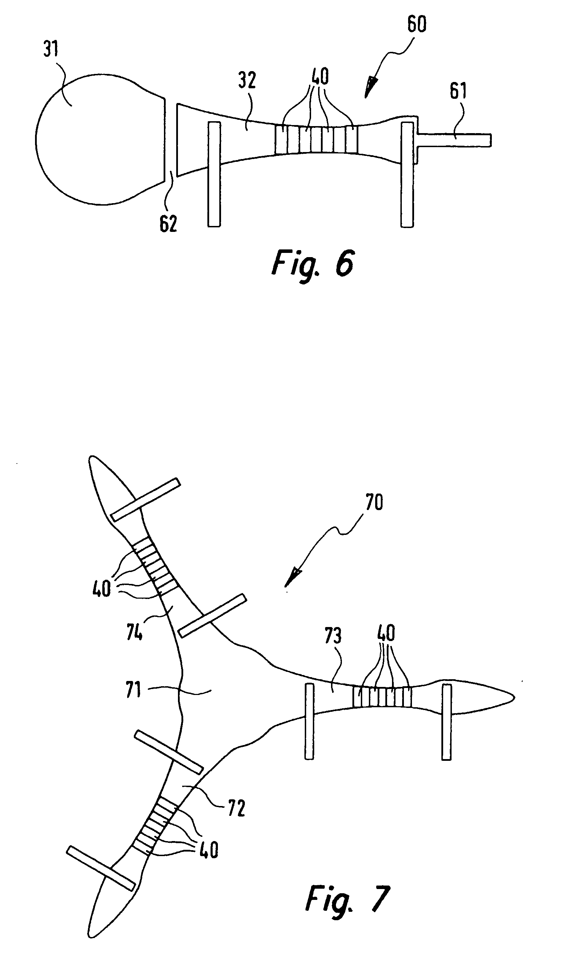

In der Figur 6 ist ein Sensorelement 60 gezeigt, das eine alternative Ausführungsform des Sensorelements 11 der Figur 3 darstellt. Bei dem Sensorelement 60 der Figur 6 ist eine Spitze 61 vorhanden, die als länglicher, dünner Streifen ausgebildet ist. Damit wird die Möglichkeit vermindert, dass eine 360°-Wand 40 im Bereich dieser Spitze 61 verloren geht.

Weiterhin ist bei dem Sensorelement 60 der Figur 6 eine streifenförmige Lücke 62 zwischen dem Wandgenerator 31 und dem Wandspeicher 32 vorhanden. Diese Lücke 62 kann durch das von dem Wandgenerator 31 erzeugte, magnetische Streufeld überbrückt werden, so dass in gleicher Weise 360°-Wände 40 in dem Wandspeicher 32 entstehen, wie dies bereits beschrieben wurde.

In der Figur 7 ist ein Sensorelement 70 gezeigt, das eine Erweiterung des Sensorelements 11 der Figur 3 darstellt. Das Sensorelement 70 der Figur 7 weist einen einzigen Wandgenerator 71 auf, der dem Wandgenerator 31 der Figur 3 entspricht. Diesem Wandgenerator 71 der Figur 7 sind jedoch drei Wandspeicher 72, 73, 74 zugeordnet. Diese sind beispielhaft in einem Winkel von jeweils etwa 120 Grad zueinander angeordnet. Die Wandspeicher 72, 73, 74 der Figur 7 entsprechen dem Wandspeicher 32 der Figur 3 und sind gleichartig ausgebildet.

Bei einer Drehung der Permanentmagnete 13 werden nacheinander 360°-Wände 40 in die drei Wandspeicher 72, 73, 74 eingespeichert. Nach jeder Umdrehung des Rotors 12 mit den Permanentmagneten 13 weisen somit alle drei Wandspeicher 72, 73, 74 denselben Zählerstand auf. Diese Redundanz kann zur Erkennung eines fehlerhaften Wandspeichers 72, 73, 74 verwendet werden. So kann immer derjenige Zählerstand als korrekt erkannt werden, der von zumindest zwei der drei Wandspeicher 72, 73, 74 angezeigt wird.

In der Figur 1 sind drei Sensorelemente 11 dargestellt, an denen die Permanentmagnete 13 vorbeibewegt werden. Damit ist es möglich, immer genau dasjenige der drei Sensorelemente 11 von einer Auswertung auszuschließen, an dem die Permanentmagnete 13 sich gerade vorbeibewegen. Auf diese Weise wird erreicht, dass von demjenigen Sensorelement 11, an dem sich die Permanentmagnete 13 gerade vorbeibewegen, keine fehlerhafte Zählung ausgelesen werden kann. Anders ausgedrückt wird gewährleistet, dass eine Auswertung der drei Sensorelemente 11 immer nur dann durchgeführt wird, wenn keine Störung des jeweiligen Sensorelements 11 aufgrund der sich vorbeibewegenden Permanentmagnete 13 vorhanden sein kann.

Die jeweiligen Winkelbereiche, in denen die einzelnen Sensorelemente 11 ausgeblendet werden müssen, können vorab festgelegt werden. Im Betrieb des Umdrehungszählers 10 können diese Winkelbereiche von einem Winkelsensor gemessen und damit berücksichtigt werden. Ein derartiger Winkelsensor ist beispielsweise im Zusammenhang mit der Lenkwelle eines Kraftfahrzeugs üblicherweise vorhanden.

Während eines der drei Sensorelemente 11 ausgeblendet ist, kann die jeweils aktuelle Umdrehungszahl mit Hilfe der beiden anderen Sensorelemente 11 ermittelt werden. Dabei kann ein fehlerhaftes Sensorelement 11 mit Hilfe eines Vergleichs der ermittelten Umdrehungsanzahlen aller drei Sensorelemente 11 erkannt werden.

Anstelle der in den Figuren 1 bis 7 gezeigten, einzelnen Sensorelemente 11, 60, 70 können auch Zusammenschaltungen von mehreren derartiger Sensorelemente verwendet werden. So ist es möglich, vier Sensorelemente 11, 60, 70 in einer Wheatstone'schen Brücke zu verschalten. Der Umdrehungszähler 10 der Figur 1 würde dann drei derartige Wheatstone'sche Brücken mit jeweils vier Sensorelementen aufweisen.

Damit Umdrehungen in beide Richtungen gezählt werden können, und damit eine eindeutige Unterscheidung zwischen Umdrehungen rechts herum und links herum getroffen werden kann, ist es vorteilhaft, die Wheatstone'sche Brücke gezielt zu verstimmen. Für diese Verstimmung der Wheatstone'schen Brücke gibt es die folgenden bevorzugten Ausgestaltungen.

In den vier Sensorelementen der Wheatstone'schen Brücke können maximal 2n Umdrehungen gezählt werden. Als Startkonfiguration sind in jedem Sensorelement n Umdrehungen gespeichert, wobei der Drehsinn für je zwei diagonal gegenüberliegende Sensorelemente links herum ist und für die anderen beiden diagonal gegenüberliegenden Sensorelemente rechts herum ist. Da die magnetoresitiven Zusatzwiderstände der gespeicherten 360°-Wände weitgehend gleich und unabhängig vom Drehsinn der Wand sind, ist die Brücke in diesem Zustand abgeglichen. Die durch das äußere Magnetfeld hervorgerufene Magnetisierungsänderung erfolgt in jedem Sensorelement in gleichem Drehsinn. Das Hinzufügen einer 360°-Wand ändert den elektrischen Widerstand in allen Sensorelementen gleich. Die Verstimmung der Brücke erfolgt nun dadurch, dass in zwei diagonal gegenüber liegenden Sensorelementen je eine 360°-Wand pro Umdrehung hinzugefügt und in den anderen zwei Sensorelementen je eine 360°-Wand entfernt wird. Die Entfernung einer Wand erfolgt durch das Zusammentreffen von zwei Wänden mit unterschiedlichem Drehsinn, wodurch diese sich auslöschen. Nach einer Umdrehung rechts herum wird in zwei diagonal gegenüberliegenden Sensorelementen n+1 360°-Wände mit Drehsinn rechts herum und in den anderen zwei Sensorelementen n-1 360°-Wände mit Drehsinn links herum gespeichert sein. Die Brücke ist somit um den Widerstandsunterschied von zwei 360°-Wänden verstimmt worden. Bei einer Umdrehung links herum ist der Widerstandsunterschied identisch, aber die Potentialdifferenz in der verstimmten Brücke hat ein anderes Vorzeichen, da das Hinzufügen und Entfernen genau umgekehrt erfolgt. D.h. links und rechts herum gezählte Umdrehungen sind eindeutig unterscheidbar. Die maximal zählbare Anzahl an Umdrehungen ist n, wobei in zwei diagonal gegenüberliegenden Sensorelementen die Anzahl gespeicherter 360°-Wände von n auf 2n hoch gezählt und in den anderen zwei Sensorelementen von n auf 0 runtergezählt wird.

In einer anderen erfindungsgemäßen Ausgestaltung können in den vier Sensorelementen der Brücke maximal 2n Umdrehungen gezählt werden. Als Startkonfiguration sind in jedem Sensorelement n Umdrehungen mit gleichen Drehsinn gespeichert. Die durch das äußere Magnetfeld hervorgerufene Magnetisierungsänderung erfolgt für je zwei diagonal gegenüberliegende Sensorelemente mit Drehsinn rechts herum und für die anderen beiden diagonal gegenüberliegenden Sensorelemente mit Drehsinn links herum. Das Hinzufügen einer 360°-Wand ändert den elektrischen Widerstand in allen Sensorelementen gleich. Hierdurch wird pro Umdrehung in zwei diagonal gegenüberliegenden Sensorelementen je eine 360°-Wand hinzugefügt und in den anderen beiden Sensorelementen je eine 360°-Wand entfernt.

In einer weiteren Ausgestaltung können in den Sensorelementen maximal n Umdrehungen gezählt werden. Als Startkonfiguration sind in jedem Sensorelement keine Umdrehungen gespeichert. In zwei diagonal gegenüber liegenden Sensorelementen erhöht die Zählung einer Umdrehung den elektrischen Widerstand in diesen Sensorelementen, während die Zählung einer Umdrehung den elektrischen Widerstand in den anderen diagonal gegenüber liegenden Sensorelementen erniedrigt. Hierzu ist es erforderlich die Ausrichtung der Magnetisierungen der beiden magnetischen Schichten bzw. Schichtstapel im GMR-System oder TMR-System für eine Halbbrücke parallel und für die andere Halbbrücke antiparallel einzustellen. Vorteil dieser Ausgestaltung ist, dass zum Speichern von maximal n Umdrehungen nur n statt 2n Speicherplätze für 360°-Wände vorzusehen sind. Die relative Widerstandsänderung pro 360°-Wand und damit das Messsignal ist somit größer als bei den anderen beiden Ausgestaltungen.

Um die obigen Startkonfiguration einstellen zu können, sehen bevorzugte Ausgestaltungen eine oder mehrere elektrische Leiterbahnen über den Sensorelementen, insbesondere über den Wandgeneratoren vor. Diese Leiterbahnen entsprechen letztlich den Leiterbahnen 51, 56, 57, die im Zusammenhang mit den Figuren 5a und 5b erläutert worden sind. Über diese Leiterbahnen können mit Hilfe von Strömen oder Stromimpulsen sich ggf. drehende Magnetfelder erzeugt werden, die als Umdrehung nur in dem jeweiligen Sensorelement gezählt werden, die also nicht die Magnetisierung in den benachbarten Sensorelementen der Wheatstone'schen Brücke verändern. Z.B. werden so die entsprechende Anzahl an 360°-Wänden der Startkonfiguration in die Sensorelemente eingeschrieben, die Umdrehungen mittels der Anzahl von 360°-Wänden zählen. Besonders bevorzugte Ausgestaltungen sehen je zwei gekreuzte Leiterbahnen über den Wandgeneratoren vor, um das drehende Magnetfeld einfach zu erzeugen.

Diese vorteilhaften Ausgestaltungen erlauben es jederzeit, das erfindungsgemäße Sensorelement und damit den Umdrehungszähler in die Startkonfiguration zurückzusetzen, z.B. wenn er hohen Störfeldern ausgesetzt war.

Anstelle des in der Figur 1 gezeigten Umdrehungszählers 10 können das Sensorelement 11 oder dessen Abwandlungen 60, 70 oder Zusammenschaltungen davon auch bei linearen oder gekrümmten Weggebern zur Anwendung kommen, bei denen z.B. in äquidistanten Abständen ein oder mehrere Permanentmagnet/e vorhanden ist/sind. In diesem Falle wird beim Vorbeibewegen jeweils eine 360°-Wand im Sensorelement gespeichert, wobei die Anzahl der Wände die Position angibt.

## Patentansprüche

1. Sensorelement (11) insbesondere für einen Umdrehungszähler (10), wobei ein magnetisches Feld an dem Sensorelement (11) vorbeibewegt werden kann, und wobei das Sensorelement (11) einen Schichtaufbau (20) mit mindestens einer weichmagnetischen Schicht (21) aufweist, so dass in dem Sensorelement (11) ohne eine Energieversorgung eine Veränderung der Magnetisierung hervorgerufen wird, wenn das magnetische Feld an dem Sensorelement (11) vorbeibewegt wird,
**dadurch gekennzeichnet,**
**dass** das Sensorelement (11) eine Gestalt (30) aufweist, die ohne eine Energieversorgung dazu geeignet ist, mehrere derartige Veränderungen zu speichern, wobei das Sensorelement (11) mindestens einen als Wandgenerator (31) bezeichneten ersten Bereich und mindestens einen als Wandspeicher (32) bezeichneten zweiten Bereich aufweist, wobei der Wandgenerator (31) im wesentlichen kreisförmig oder vieleckig ausgebildet ist, und wobei der Wandspeicher (32) im wesentlichen länglich, insbesondere keilförmig ausgebildet ist.

2. Sensorelement (11) nach Anspruch 1, wobei in dem Sensorelement (11) eine Domänenwand, insbesondere eine 360°-Wand (40) entsteht, wenn das magnetische Feld an dem Sensorelement (11) vorbeibewegt wird, und wobei mehrere Domänenwände, insbesondere 360°-Wände (40), in dem Sensorelement (11) speicherbar sind.

3. Sensorelement (11) nach einem der Ansprüche 1 oder 2, wobei der Schichtaufbau (20) von unten oder von oben aufeinanderfolgend mindestens die weichmagnetische Schicht (21), mindestens eine unmagnetische Metallschicht (22) oder mindestens eine Isolationsschicht (22') und mindestens eine hartmagnetische Schicht (23) aufweist.

4. Sensorelement nach Anspruch 3, wobei auf die oberste oder unterste hartmagnetische Schicht (23) entweder mindestens eine antiferromagnetische Schicht (24) folgt oder mindestens eine unmagnetische Metallschicht und mindestens eine hartmagnetische Schicht folgen, die zusammen mit der hartmagnetischen Schicht (23) einen künstlichen Antiferromagneten bilden, oder vorzugsweise mindestens eine unmagnetische Metallschicht und mindestens eine hartmagnetische Schicht, die zusammen mit der hartmagnetischen Schicht (23) einen künstlichen Antiferromagneten bilden, und mindestens eine antiferromagnetische Schicht (24) folgen.

5. Sensorelement (11) nach einem der Ansprüche 1 bis 4, wobei der Wandgenerator (31) derart ausgebildet ist, dass die Magnetisierung in dem Wandgenerator (31) leicht dem sich bewegenden, magnetischen Feld folgen kann.

6. Sensorelement (11) nach einem der Ansprüche 1 bis 5, wobei der Wandspeicher (32) derart ausgebildet ist, dass die Magnetisierung in dem Wandspeicher (32) durch das sich bewegende, magnetische Feld im wesentlichen nicht verändert wird.

7. Sensorelement (11) nach einem der Ansprüche 1 bis 6, wobei der Wandspeicher (32) mindestens eine Verengung (33), insbesondere eine Verengung (33) pro zu zählender Umdrehung, aufweist.

8. Sensorelement (11) nach einem der Ansprüche 1 bis 7, wobei der Wandspeicher (32) mindestens eine gezielt eingebrachte, lokal begrenzte Änderung der magnetischen Eigenschaften insbesondere pro zu zählender Umdrehung aufweist.

9. Sensorelement (11) nach Anspruch 8, wobei mindestens eine lokal begrenzte hartmagnetische Schicht vorgesehen ist, um eine lokal begrenzte Änderung der magnetischen Eigenschaften des Wandspeichers (32) hervorzurufen.

10. Sensorelement (11) nach einem der Ansprüche 1 bis 9, wobei der Wandspeicher (32) mindestens zwei Kontakte (26, 26') aufweist.

11. Sensorelement (11) nach Anspruch 7 oder 8, wobei der Wandspeicher (32) zwei Kontakte (26, 26') pro Verengung (33) und/oder pro lokal begrenzter Änderung aufweist.

12. Sensorelement (11) nach Anspruch 10 und einem der Ansprüche 7 und/oder 8, wobei die Verengung (33) und/oder die Änderung sich etwa mittig zwischen den Kontakten (26, 26') befindet.

13. Sensorelement (11) nach einem der Ansprüche 1 bis 12, wobei der Wandgenerator (31) mittels eines keilförmigen Teils (34) in den Wandspeicher (32) übergeht.

14. Sensorelement (11) nach einem der Ansprüche 1 bis 13, wobei der Wandspeicher (32) mit einer Spitze (35), insbesondere einer als länglicher Streifen ausgebildeten Spitze (61), versehen ist.

15. Sensorelement (11) nach einem der Ansprüche 1 bis 14, wobei der Wandspeicher (32) mit einer Abdeckschicht (28), insbesondere mit einer magnetischen Abschirmschicht, insbesondere einer Permalloyschicht, abgedeckt ist.

16. Sensorelement (11) nach einem der Ansprüche 1 bis 15, wobei mehrere Wandspeicher (72, 73, 74) einem einzelnen Wandgenerator (71) zugeordnet sind.

17. Sensorelement (11) nach einem der Ansprüche 1 bis 16, wobei zumindest eine elektrische Leiterbahn (51; 56, 57) über das Sensorelement (11) gelegt ist.

18. Sensorelement (11) nach einem der Ansprüche 1 bis 17, wobei die Anzahl der gespeicherten Veränderungen der Magnetisierung mittels des Giant Magneto Resistance (GMR) Effekts und/oder des Tunnel Magneto Resistance (TMR) Effekts und/oder eines magneto-optischen Verfahrens und/oder eines magneto-striktiven Verfahrens ermittelbar ist.

19. Sensorelement (11) nach Anspruch 18 und einem der Ansprüche 10, 11 oder 12, wobei der elektrische Widerstand zwischen den Kontakten (26, 26') sich in Abhängigkeit von der Anzahl der gespeicherten Veränderungen der Magnetisierung ändert.

20. Wheatstone'sche Brücke **gekennzeichnet durch** die Verwendung von vier Sensorelementen (11) nach einem der Ansprüche 1 bis 19.

21. Umdrehungszähler (10) **gekennzeichnet durch** die Verwendung eines Sensorelements nach einem der Ansprüche 1 bis 19 oder einer Wheatstone'schen Brücke nach Anspruch 20.

22. Umdrehungszähler (10) nach Anspruch 21, wobei das magnetische Feld von einem, insbesondere von zwei Permanentmagneten (13) erzeugbar ist.

23. Umdrehungszähler (10) nach einem der Ansprüche 21 oder 22, wobei mehrere Sensorelemente (11) vorgesehen sind, die in etwa gleichen Winkelabständen zueinander angeordnet sind, und an denen das magnetische Feld vorbei bewegbar ist.

24. Umdrehungszähler (10) nach einem der Ansprüche 21 bis 23, **gekennzeichnet durch** dessen Verwendung in einem Kraftfahrzeug, wobei das magnetische Feld insbesondere mit einer Lenkwelle des Kraftfahrzeugs gekoppelt ist.

## Claims

1. Sensor element (11), in particular for a revolution counter (10), it being possible to move a magnetic field past the sensor element (11), and the sensor element (11) having a layer structure (20) with at least one magnetically soft layer (21) so that a change of magnetization is brought about in the sensor element (11) without an energy supply when the magnetic field is moved past the sensor element (11), **characterized in that** the sensor element (11) has a form (30) which, without an energy supply, is suitable for storing a plurality of such changes, the sensor element (11) having at least one first region designated as a wall generator (31) and at least one second region designated as a wall memory (32), the wall generator (31) being substantially circular or polygonal, and the wall memory (32) being substantially elongated, in particular wedge-shaped.

2. Sensor element (11) according to Claim 1, wherein a domain wall, in particular a 360° wall (40), forms in the sensor element (11) when the magnetic field is moved past the sensor element (11), and wherein a plurality of domain walls, in particular 360° walls (40), can be stored in the sensor element (11).

3. Sensor element (11) according to either of Claims 1 and 2, wherein the layer structure (20) has, in succession from the bottom or the top, at least the magnetically soft layer (21), at least one non-magnetic metal layer (22) or at least one insulating layer (22') and at least one magnetically hard layer (23).

4. Sensor element according to Claim 3, wherein the uppermost or lowest magnetically hard layer (23) is followed either by at least one antiferromagnetic layer (24) or at least one non-magnetic metal layer and at least one magnetically hard layer, which, together with the magnetically hard layer (23), form an artificial antiferromagnet, or preferably by at least one non-magnetic metal layer and at least one magnetically hard layer, which, together with the magnetically hard layer (23) form an artificial antiferromagnet, and at least one antiferromagnetic layer (24).

5. Sensor element (11) according to any of Claims 1 to 4, wherein the wall generator (31) is formed in such a way that the magnetization in the wall generator (31) can easily follow the moving, magnetic field.

6. Sensor element (11) according to any of Claims 1 to 5, wherein the wall memory (32) is formed in such a way that the magnetization in the wall memory (32) is substantially unchanged by the moving, magnetic field.

7. Sensor element (11) according to any of Claims 1 to 6, wherein the wall memory (32) has at least one constriction (33), in particular one constriction (33) per revolution to be counted.

8. Sensor element (11) according to any of Claims 1 to 7, wherein the wall memory (32) has at least one deliberately introduced, localized change of the magnetic properties, in particular per revolution to be counted.

9. Sensor element (11) according to Claim 8, wherein at least one localized magnetically hard layer is provided in order to bring about a localized change of magnetic properties of the wall memory (32).

10. Sensor element (11) according to any of Claims 1 to 9, wherein the wall memory (32) has at least two contacts (26, 26').

11. Sensor element (11) according to Claim 7 or 8, wherein the wall memory (32) has two contacts (26, 26') per constriction (33) and/or per localized change.

12. Sensor element (11) according to Claim 10 and one of Claims 7 and/or 8, wherein the constriction (33) and/or the change is present approximately in the middle between the contacts (26, 26').

13. Sensor element (11) according to any of Claims 1 to 12, wherein the wall generator (31) passes over into the wall memory (32) by means of a wedge-shaped part (34) .

14. Sensor element (11) according to any of Claims 1 to 13, wherein the wall memory (32) is provided with a tip (35), in particular a tip (61) in the form of an elongated strip.

15. Sensor element (11) according to any of Claims 1 to 14, wherein the wall memory (32) is covered by a covering layer (28) in particular by a magnetic screening layer, in particular a Permalloy layer.

16. Sensor element (11) according to any of Claims 1 to 15, wherein a plurality of wall memories (72, 73, 74) are coordinated with an individual wall generator (71) .

17. Sensor element (11) according to any of Claims 1 to 16, wherein at least one electrical conductor track (51; 56, 57) is laid on top of the sensor element (11).

18. Sensor element (11) according to any of Claims 1 to 17, wherein the number of stored changes of magnetization can be determined by means of the giant magneto resistance (GMR) effect and/or the tunnel magneto resistance (TMR) effect and/or a magneto-optical method and/or a magnetostrictive method.

19. Sensor element (11) according to Claim 18 and any of Claims 10, 11 or 12, wherein the electrical resistance between the contacts (26, 26') changes as a function of the number of stored changes of magnetization.

20. Wheatstone bridge **characterized by** the use of four sensor elements (11) according to any of Claims 1 to 19.

21. Revolution counter (10) **characterized by** the use of a sensor element according to any of Claims 1 to 19 or a Wheatstone bridge according to Claim 20.

22. Revolution counter (10) according to Claim 21, wherein the magnetic field can be produced by a permanent magnet (13), in particular by two permanent magnets (13).

23. Revolution counter (10) according to either of Claims 21 and 22, wherein a plurality of sensor elements (11) are provided, which are arranged approximately equal angular intervals apart and past which the magnetic field can be moved.

24. Revolution counter (10) according to any of Claims 21 to 23, **characterized by** its use in a motor vehicle, the magnetic field being coupled in particular to a steering shaft of the motor vehicle.

## Revendications

1. Capteur (11), en particulier pour un compte-tours (10), un champ magnétique pouvant être déplacé à proximité du capteur (11) et le capteur (11) possédant une structure en couches (20) ayant au moins une couche magnétique douce (21) de manière à provoquer dans le capteur (11), sans alimentation en énergie, une variation de la magnétisation lorsque le champ magnétique passe à proximité du capteur (11), **caractérisé en ce que** le capteur (11) présente une forme (30) qui, sans alimentation en énergie, permet de mémoriser plusieurs variations de ce type, le capteur (11) présentant au moins une première zone désignée en tant que générateur de parois (31) et au moins une seconde zone désignée en tant que mémoire de parois (32), le générateur de parois (31) étant réalisé essentiellement en forme de cercle ou de polygone et la mémoire de parois (32) étant réalisée essentiellement de forme oblongue, en particulier en forme de coin.

2. Capteur (11) selon la revendication 1, **caractérisé en ce qu'**une paroi de domaine, en particulier une paroi à 360° (40), se crée dans le capteur (11) lorsque le champ magnétique passe à proximité du capteur (11) et plusieurs parois de domaines, en particulier des parois à 360° (40), pouvant être mémorisées dans le capteur (11).

3. Capteur (11) selon l'une des revendications 1 ou 2, **caractérisé en ce que** la structure en couches (20) présente, l'une sur l'autre de bas en haut ou de haut en bas, au moins la couche magnétique douce (21), au moins une couche métallique amagnétique (22) ou au moins une couche d'isolation (22') et au moins une couche magnétique dure (23).

4. Capteur selon la revendication 3, **caractérisé en ce qu'**au moins une couche antiferromagnétique (24) ou au moins une couche métallique amagnétique et au moins une couche magnétique dure suivant sur la couche magnétique dure (23) supérieure ou inférieure, lesquelles forment, avec la couche magnétique dure (23), une substance antiferromagnétique artificielle, ou de préférence au moins une couche métallique amagnétique et au moins une couche magnétique dure qui, avec la couche magnétique dure (23), forment une substance antiferromagnétique artificielle, et au moins une couche antiferromagnétique (24) .

5. Capteur (11) selon l'une des revendications 1 à 4, **caractérisé en ce que** le générateur de parois (31) étant réalisé de telle façon que la magnétisation dans le générateur de parois (31) peut suivre facilement le champ magnétique qui se déplace.

6. Capteur (11) selon l'une des revendications 1 à 5, **caractérisé en ce que** la mémoire de parois (32) est réalisée de telle façon que la magnétisation dans la mémoire de parois (32) n'est pour l'essentiel pas modifiée par le champ magnétique qui se déplace.

7. Capteur (11) selon l'une des revendications 1 à 6, **caractérisé en ce que** la mémoire de parois (32) présente au moins un rétrécissement (33), en particulier un rétrécissement (33) par tour à compter.

8. Capteur (11) selon l'une des revendications 1 à 7, **caractérisé en ce que** la mémoire de parois (32) présente au moins une variation des caractéristiques magnétiques, localement limitée et apportée de manière ciblée, en particulier par tour à compter.

9. Capteur (11) selon la revendication 8, **caractérisé en ce qu'**au moins une couche magnétique dure localement limitée est prévue afin de provoquer une variation localement limitée des caractéristiques magnétiques de la mémoire de parois (32).

10. Capteur (11) selon l'une des revendications 1 à 9, **caractérisé en ce que** la mémoire de parois (32) présente au moins deux contacts (26, 26').

11. Capteur (11) selon la revendication 7 ou 8, **caractérisé en ce que** la mémoire de parois (32) présente deux contacts (26, 26') par rétrécissement (33) et/ou par variation localement limitée.

12. Capteur (11) selon la revendication 10 et l'une des revendications 7 et/ou 8, **caractérisé en ce que** le rétrécissement (33) et/ou la variation se trouve approximativement au milieu entre les contacts (26, 26').

13. Capteur (11) selon l'une des revendications 1 à 12, **caractérisé en ce que** le générateur de parois (31) se fonde dans la mémoire de parois (32) par une partie (34) en forme de coin.

14. Capteur (11) selon l'une des revendications 1 à 13, **caractérisé en ce que** la mémoire de parois (32) est pourvue d'une pointe (35), en particulier d'une pointe (61) réalisée sous la forme d'une bande oblongue.

15. Capteur (11) selon l'une des revendications 1 à 14, **caractérisé en ce que** la mémoire de parois (32) est couverte par une couche de recouvrement (28), en particulier par une couche de blindage magnétique, en particulier par une couche en permalloy.

16. Capteur (11) selon l'une des revendications 1 à 15, **caractérisé en ce que** plusieurs mémoires de parois (72, 73, 74) sont associées à un seul et même générateur de parois (71).

17. Capteur (11) selon l'une des revendications 1 à 16, **caractérisé en ce qu'**au moins une piste conductive électrique (51, 56, 57) est posée au-dessus du capteur (11).

18. Capteur (11) selon l'une des revendications 1 à 17, **caractérisé en ce que** le nombre des variations mémorisées de la magnétisation peut être établi au moyen de l'effet de magnétorésistance géante (GMR) et/ou de l'effet de magnétorésistance tunnel (TMR) et/ou d'un procédé magnéto-optique et/ou d'un procédé magnétostrictif.

19. Capteur (11) selon la revendication 18 et l'une des revendications 10, 11 ou 12, **caractérisé en ce que** la résistance électrique entre les contacts (26, 26') varie en fonction du nombre des variations mémorisées de la magnétisation.

20. Pont de Wheatstone, **caractérisé par** l'utilisation de quatre capteurs (11) selon l'une des revendications 1 à 19.

21. Compte-tours (10), **caractérisé par** l'utilisation d'un capteur selon l'une des revendications 1 à 19 ou d'un pont de Wheatstone selon la revendication 20.

22. Compte-tours (10) selon la revendication 21, **caractérisé en ce que** le champ magnétique peut être produit par un, en particulier par deux aimants permanents (13).

23. Compte-tours (10) selon l'une des revendications 21 ou 22, **caractérisé en ce que** plusieurs capteurs (11) sont prévus, lesquels sont agencés entre eux à des distances angulaires approximativement égales et à proximité desquels le champ magnétique peut passer.

24. Compte-tours (10) selon l'une des revendications 21 à 23, **caractérisé par** son utilisation dans un véhicule automobile, le champ magnétique étant couplé en particulier à un arbre de direction du véhicule automobile.
